Europäisches Patentamt

European Patent Office

Office européen des brevets

(19)

(11) Numéro de publication : **0 162 745**
**B1**

(12) **FASCICULE DE BREVET EUROPÉEN**

(45) Date de publication du fascicule du brevet :
07.09.88

(51) Int. Cl.⁴ : **F 16 F   1/38, B 60 G   7/00**

(21) Numéro de dépôt : **85400766.3**

(22) Date de dépôt : **17.04.85**

(54) Articulation élastique à débattement radial limité, notamment pour attache de roue tirée.

(30) Priorité : **02.05.84 FR 8406800**

(43) Date de publication de la demande :
**27.11.85 Bulletin 85/48**

(45) Mention de la délivrance du brevet :
**07.09.88 Bulletin 88/36**

(84) Etats contractants désignés :
**BE DE GB IT NL SE**

(56) Documents cités :
**BE-A-   453 370**
**FR-A- 1 461 844**
**FR-A- 2 202 556**
**FR-A- 2 441 101**
**FR-A- 2 534 331**
**GB-A-   885 154**
**GB-A- 2 068 477**
**US-A- 2 906 572**
**US-A- 3 140 081**

(73) Titulaire : **HUTCHINSON**
**2 rue Balzac**
**F-75008 Paris (FR)**

(72) Inventeur : **Pierrat, Jacques**
**30, rue des Bois**
**F-75019 Paris (FR)**

(74) Mandataire : **Picard, Jean-Claude Georges et al**
**Cabinet Plasseraud 84, rue d'Amsterdam**
**F-75009 Paris (FR)**

## Description

La présente invention concerne une articulation élastique à débattement radial limité, notamment pour attache de roue tirée, du type comprenant deux manchons cylindriques dont l'un entoure l'autre et entre lesquels est adhérisé un bloc d'une matière élastique aux extrémités duquel sont ménagées latéralement deux gorges essentiellement symétriques l'une de l'autre par un plan transversal médian des manchons et s'étendant latéralement en bout, chaque gorge comprenant une partie de fond de forme allongée globalement en direction radiale, et qui se poursuit latéralement par un dégagement débouchant à l'extérieur, et ayant en direction radiale une dimension moindre que celle de ladite partie de fond.

Lesdites gorges latérales permettent en particulier de limiter énergiquement les débattements de l'articulation, en faisant en sorte que sa section travaillante normale augmente rapidement dès que les déflexions normales d'utilisation sont dépassées, ceci permettant d'obtenir un guidage de train susceptible d'assurer une bonne tenue de route en toutes circonstances (par exemple en virage), et évitant une déflexion trop importante sous charge verticale exceptionnelle (par exemple lors du passage de la roue dans un nid-de-poule).

En effet, en fonctionnement normal la section du bloc de matière élastique travaillant en déflexion radiale, de même qu'en torsion, est celle qui s'étend essentiellement centralement ; par contre, en cas d'effort radial exceptionnel (tirage en longitudinal ou vertical en débattement de suspension), la ou les gorges se ferment, et la section travaillante du bloc de matière élastique devient pratiquement égale à la totalité de la section s'étendant entre les deux manchons, ce qui empêche alors énergiquement que la déflexion dépasse un certain seuil, fixé par avance.

Ce type d'articulation est connu par exemple par le document FR-A-1 461 844, mais la forme des gorges latérales est telle qu'il y a entre leurs fonds un rétrécissement très important de la section de la matière élastique du manchon, d'où une augmentation très notable des contraintes de torsion à ce niveau.

Le même type d'inconvénient se rencontre dans les articulations des documents FR-A-2 441 101, US-A-3 140 081, BE-A-453 370, GB-A-885 154 et GB-A-2 068 477.

Le but de la présente invention est de remédier à cet inconvénient, et d'obtenir, nonobstant la présence des gorges latérales, une répartition uniforme des contraintes de torsion dans les différentes sections de la matière élastique du manchon.

A cet effet, une articulation élastique du type mentionné au début est, conformément à la présente invention, essentiellement caractérisée en ce que les dégagements s'étendent dans une direction généralement parallèle à l'axe de l'articulation et que lesdites parties du fond des gorges, allongées globalement en direction radiale, sont inclinées, symétriquement l'une de l'autre par rapport au plan transversal médian des manchons, délimitant ainsi les deux côtés latéraux d'une section travaillante normale en torsion trapézoïdale dudit bloc de matière élastique.

Un exemple de réalisation d'une articulation conforme à l'invention est donné ci-dessous à titre nullement limitatif, avec référence aux figures du dessin annexé dans lequel :

— la figure 1 est une vue en demi-coupe axiale d'une articulation élastique conforme à la présente invention ; et

— les figures 2 et 3 montrent deux solutions différentes pour l'obturation des deux gorges périphériques.

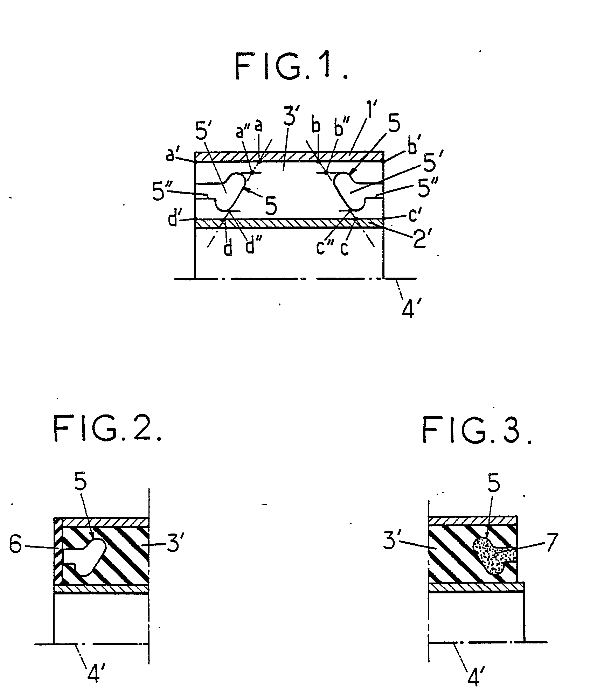

A la figure 1, on a référencié en 1' le manchon cylindrique extérieur de l'articulation, et en 2' le manchon élastique intérieur, coaxial au précédent. Entre les deux est adhérisé un bloc de matière élastique, par exemple en élastomère, lequel est référencé en 3'.

Dans les extrémités de ce bloc, qui a une forme globale extérieure cylindrique, sont ménagées deux gorges 5, symétriques l'une de l'autre par rapport au plan transversal médian des manchons 1' et 2', dont l'axe commun est référencé 4'. Il s'agit de préférence de gorges périphériques, mais il n'est pas à exclure qu'elles n'occupent que des arcs de cercle sur cette périphérie des extrémités du bloc élastique 3'.

Lesdites gorges 5 comprennent chacune une partie de fond 5' de forme allongée globalement en direction radiale, et qui se poursuit latéralement par un dégagement 5" débouchant à l'extérieur, et ayant en direction radiale une dimension moindre que celle de ladite partie de fond 5'.

La raison de cet allongement des parties de fond 5' en direction radiale réside dans le fait qu'en torsion du bloc 3', la section travaillante ne s'étend pas au-delà des gorges 5 ; cette section est délimitée par le trapèze a" b" c" d" (pour que ces points soient mieux visibles sur la figure 1, on n'a pas représenté l'élastomère constituant le bloc 3'). Cette disposition permet donc de donner une extension radiale suffisante au bloc 3', comme cela est nécessaire, pour éviter des contraintes de cisaillement en torsion trop élevées.

Quant aux dégagements 5", ils ont pour objet de séparer au mieux les deux zones d'utilisation du bloc, leur hauteur devant par ailleurs être compatible avec l'élastomère utilisé, pour permettre le démoulage du bloc.

Selon la disposition essentielle de l'invention, on a préservé la forme globalement trapézoïdale de la section travaillante en torsion a" b" c" d", en prévoyant que lesdites parties 5' de fond des gorges 5, allongées globalement en direction radiale, sont inclinées, symétriquement l'une de l'autre par rapport au plan transversal médian des manchons 1', 2', délimitant ainsi les deux côtés latéraux de ladite section trapézoïdale a″ b″ c″ d″.

Pour ce qui est des déformations radiales, la section intéressée est également trapézoïdale et est délimitée par les pointes abcd.

Une telle articulation, on le voit, assure une répartition uniforme des contraintes de torsion dans les différentes sections de l'élastomère, et elle permet d'obtenir aussi un couple de rappel de torsion faible, la section intéressée pouvant rester relativement faible, tout en restant compatible avec la charge statique du véhicule.

Cette articulation présente aussi l'avantage de constituer une butée extrêmement efficace, empêchant des débattements excessifs du bras oscillant de la suspension. En effet, lorsque l'écrasement du bloc 3' arrive à une valeur telle que les dégagements 5″ des gorges 5 se ferment complètement, la section de l'élastomère intéressée passe brusquement de la section trapézoïdale susmentionnée à la quasi-totalité de la section du bloc, délimitée par les points a' b' c' d'. La raideur du bloc augmente alors brutalement, et empêche le bras oscillant de dépasser le débattement limite ainsi fixé.

En cas de besoin, on peut prévoir en outre des moyens obturateurs bouchant lesdites gorges sans empêcher leur déformation.

Comme représenté à la figure 2, ces moyens peuvent être constitués par un déflecteur d'étanchéité souple 6 placé devant l'entrée desdites gorges 5, ou, comme représenté à la figure 3, par un bouchon de remplissage souple 7, emplissant lesdites gorges, et pouvant être constitué par exemple en un élastomère alvéolaire.

Ces moyens empêchent efficacement que de la boue, du sable ou autres impuretés ne pénètrent dans les gorges 5 des blocs élastiques.

**Revendications**

1. Articulation élastique à débattement radial limité, notamment pour attache de roue tirée, du type comprenant deux manchons cylindriques dont l'un entoure l'autre et entre lesquels est adhérisé un bloc d'une matière élastique aux extrémités duquel sont ménagées latéralement deux gorges (5) essentiellement symétriques l'une de l'autre par rapport au plan transversal médian des manchons (1', 2') et s'étendant latéralement en bout, chaque gorge (5) comprenant une partie de fond (5') de forme allongée globalement en direction radiale, et qui se poursuit latéralement par un dégagement (5″) débouchant à l'extérieur, et ayant en direction radiale une dimension moindre que celle de ladite partie de fond (5'), caractérisée en ce que les dégagements (5″) s'étendent dans une direction généralement parallèle à l'axe de l'articulation et que lesdites parties (5') du fond des gorges (5), allongées globalement en direction radiale, sont inclinées, symétriquement l'une de l'autre par rapport au plan transversal médian des manchons (1', 2'), délimitant ainsi les deux côtés latéraux d'une section travaillante normale en torsion trapézoïdale (a″ b″ c″ d″) dudit bloc de matière élastique.

2. Articulation selon la revendication 1, caractérisée en ce qu'elle comporte des moyens obturateurs bouchant lesdites gorges sans empêcher leur déformation.

3. Articulation selon la revendication 2, caractérisée en ce que lesdits moyens obturateurs sont constitués par un déflecteur d'étanchéité souple (6) placé devant l'entrée desdites gorges (5).

4. Articulation selon la revendication 2, caractérisée en ce que lesdits moyens obturateurs sont constitués par un bouchon de remplissage souple (7), emplissant lesdites gorges.

**Claims**

1. Elastic joint with limited radial movement, especially for trailed wheels, of the type comprising two cylindrical sleeves, of which the one surrounds the other and between which is bonded a block of elastic material, at the ends of which are arranged laterally two grooves (5) substantially symmetrical to each other relative to the transverse median plane of the sleeves (1', 2') and extending laterally to the ends, each groove (5) comprising a base portion (5') of generally elongated form in the radial direction, and which continues laterally through a channel (5″) opening to the exterior, and having a size in the radial direction less than that of the said base portion (5'), characterized in that the channels (5″) extend in a direction generally parallel to the axis of the joint and in that the said base portions (5') of the grooves (5), generally elongated in the radial direction, are inclined symmetrically to one another relative to the transverse median plane of the sleeves (1', 2'), thereby delimiting the two lateral sides of a trapezoidal section (a″ b″ c″ d″) of the said block of elastic material working normally in tension.

2. Joint according to claim 1, characterized in that it comprises blocking means blocking the said grooves without hindering their deformation.

3. Joint according to claim 2, characterized in that the said blocking means are constituted by a flexible seal (6) disposed over the entry of the said grooves (5).

4. Joint according to claim 2, characterized in that the said blocking means are constituted by a flexible plug (7) filling the said grooves.

**Patentansprüche**

1. Elastisches Gelenk mit begrenztem radialem Spiel, insbesondere zur Befestigung eines Radlenkers, das aus zwei zylindrischen Hülsen besteht, von denen die eine die andere umgibt und zwischen denen ein Block aus elastischem Material befestigt ist, an dessen Endabschnitten seitlich zwei Auskehlungen (5) angebracht sind, die in bezug auf die mittlere Querebene der Hülsen (1', 2') im wesentlichen symmetrisch zueinander angeordnet sind und sich seitlich bis zu den Enden der Hülse erstrecken, wobei jede Auskehlung (5) einen länglichen Bodenabschnitt (5') enthält, der sich im Ganzen gesehen, in radialer Richtung erstreckt und an den sich seitlich ein Ausgangskanal (5") anschließt, der an der Außenfläche mündet und in radialer Richtung einen kleineren Durchmesser hat als der Bodenabschnitt (5'), dadurch gekennzeichnet, daß die Ausgangskanäle (5") sich in einer generell zur Achse des Gelenkes parallel verlaufenden Richtung erstrecken und daß die Bodenabschnitte (5') der Auskehlungen (5), die sich global gesehen in radialer Richtung ausdehnen, in bezug auf die mittlere Querachse der Hülsen (1', 2') symmetrisch zueinander geneigt verlaufen und auf diese Weise die beiden Seitenflächen eines normal auf Torsion beanspruchten trapezförmigen Abschnittes (a", b", c", d") des Blockes aus elastischem Material begrenzen.

2. Gelenk nach Anspruch 1, dadurch gekennzeichnet, daß es Verschlußmittel enthält, die die Auskehlungen abdichten, ohne ihre Deformation zu behindern.

3. Gelenk nach Anspruch 2, dadurch gekennzeichnet, daß die Verschlußmittel aus einer nachgiebigen Abdichtungsplatte (6) bestehen, die vor der Mündung der Auskehlungen (5) angeordnet ist.

4. Gelenk nach Anspruch 2, dadurch gekennzeichnet, daß die Verschlußmittel aus einem Stopfen (7) aus nachgiebigem Material bestehen, der die Auskehlungen ausfüllt.

# FIG.1.

# FIG.2.

# FIG.3.